Europäisches Patentamt

European Patent Office

Office européen des brevets

(11) Veröffentlichungsnummer: **0 267 603 B1**

## (12) EUROPÄISCHE PATENTSCHRIFT

(45) Veröffentlichungstag der Patentschrift: **26.02.92**

(21) Anmeldenummer: **87116683.1**

(22) Anmeldetag: **12.11.87**

Die Akte enthält technische Angaben, die nach
dem Eingang der Anmeldung eingereicht wurden
und die nicht in dieser Patentschrift enthalten sind.

(51) Int. Cl.⁵: **C08J 5/06**, C08K 7/06

(54) **Formkörper aus faserverstärktem Polyurethanintegralschaum.**

(30) Priorität: **14.11.86 DE 3638985**

(43) Veröffentlichungstag der Anmeldung:
**18.05.88 Patentblatt 88/20**

(45) Bekanntmachung des Hinweises auf die
Patenterteilung:
**26.02.92 Patentblatt 92/09**

(84) Benannte Vertragsstaaten:
**AT BE CH DE ES FR GB IT LI NL SE**

(56) Entgegenhaltungen:
**DE-A- 2 014 899**
**DE-A- 2 922 769**
**US-A- 3 644 168**

(73) Patentinhaber: **PHOENIX AKTIENGESELL-
SCHAFT
Hannoversche Strasse 88
W-2100 Hamburg 90(DE)**

(72) Erfinder: **Schaper, Herbert, Dipl.-Chem.Dr.
Hagedornstrasse 22
W-2000 Hamburg 13(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Formkörper aus faserverstärktem Polyurethanintegralschaum gemäß dem Oberbegriff des Anspruchs 1.

Bezüglich der Herstellung dieser Formkörper gibt es zahlreiche veröffentlichte Arbeiten, wobei nun die bisherigen Entwicklungsarbeiten der Anmelderin auf diesem Gebiet im Rahmen einer Übersicht aufgeführt werden.

DE-A-24 61 521
DE-A-27 14 518
DE-A-27 18 173
DE-A-29 22 769
DE-C-26 12 896
DE-C-28 19 037
DE-C-32 26 818

Bisher wurden derartige Formkörper mit Glasfasern verstärkt. Im Rahmen einer Weiterentwicklung sollen nun die Verstärkungsfasern so gewählt sein, daß einmal die Formkörper ein geringeres Gewicht aufweisen und daß zum anderen der bei Glasfasern auftretende Glitzereffekt durch helle freigelegte Glasfasern bei der Alterung vermieden wird.

Die gestellte Aufgabe wird gelöst durch die kennzeichnenden Merkmale des Anspruchs 1.

Der Vorteil der C-Faser liegt darin, daß man mit kleinen Mengen dieser Faser den gleichen Effekt herstellen kann wie mit großen Glasfasermengen, wobei dadurch im Endprodukt außerdem eine geringere Dichte erzielt wird, was zu Gewichtseinsparungen am Automobil führt.

Der bei der Glasfaser auftretende Glitzereffekt durch helle freigelegte Glasfaser bei der Alterung wird vermieden. Bei der C-Faser kann bei unlackierten Teilen schlimmstenfalls eine gewisse Strukturierung der Oberfläche auftreten. Wegen der geringen Konzentration der C-Faser dürfte dies aber zu vernachlässigen sein. Die erfindungsgemäße Menge an C-Fasern beträgt 0,3 bis 8 Gew.-%, insbesondere 2 bis 5 Gew.-%, bezogen auf das Artikelgewicht.

Mit ca. 2 Gew.-% C-Faser erreicht man bereits etwa den gleichen Effekt wie mit 15 Gew.-% gemahlener Glasfaser.

Die weiteren zweckmäßigen Ausgestaltungsmerkmale sind:
Die durchschnittliche Faserlänge beträgt 0,3 bis 0,4 mm. Ferner weisen die C-Fasern einen durchschnittlichen Durchmesser von 14 bis 15 $\mu$m auf. Die C-Fasern werden der A-Komponente (Polyol) und/oder der B-Komponente (Polyisocyanat) beigemischt.

Experimentelle Beschreibung

Als C-Faser wurde eine Carbonfaser auf Pechbasis (Typ M-104T, Firma Sigri GmbH) eingesetzt, wobei die durchschnittliche Faserlänge 0,37 mm und der durchschnittliche Durchmesser 14,5 $\mu$m betrug. Als A-Komponente auf Basis Polyol/Amin wurde das Fertigsystem Bayflex 110-80 (Firma Bayer) verwendet, u. z. als BA 904 (Beispiel 1) und BA 569 (Beispiel 2). In das käufliche Polyol/Amin-System wurde die Kohlefaser langsam eingerührt. Im Beispiel 1 wurde außerdem eine Schwarzpaste B 1038 (Firma ISL-Chemie; 20 Gew.-% Farbruß in einem Polyol mit MG 4800 ± 300) zum Anfärben der Mischung zugegeben. Die Rezeptur für die gesamte A-Komponente im einzelnen:

| Beispiel 1 | | | Beispiel 2 | | |
|---|---|---|---|---|---|
| BA 904 | 90 | Gew.-Teile | BA 569 | 100 | Gew.-Teile |
| M-104T | 6 | " | M-104T | 4 | " |
| B 1038 | 10 | " | B 1038 | – | |

Als B-Komponente wurde das Isocyanat PA 100 (Firma Bayer), ein mit Tripropylenglykol verlängertes 4,4'-Diphenylmethandiisocyanat (Prepolymer) verwendet, und zwar im folgenden Verschäumungsverhältnis in Gew.-Teilen, wobei sich das Verhältnis auf die gesamte A-Komponente bezieht:
Beispiel 1: A : B = 100 : 49,1 (Isocyanatindex 110)
Beispiel 2: A : B = 100 : 54,3 (Isocyanatindex 110)

Die Verschäumung erfolgte mit einer RIM-Hochdruckmaschine, und zwar in eine Plattenform von 3 bis 4,5 mm Stärke. Die Verfahrensparameter waren:

| | |
|---|---|
| Rohstofftemperatur A [°C] | 50 |
| Rohstofftemperatur B [°C] | 40 |
| Luftbeladung [Vol-%] | 50 |
| Schäumdruck A [Kp/cm$^2$] | 190 |
| Schäumdruck B [Kp/cm$^2$] | 170 |
| Ausstoßleistung [g/sec] | 1650 |
| Formvolumen [cm$^3$] | 1460 |
| Einschußzeit [sec] | 1,5 |
| Formtemperatur [°C] | 60 |
| Formstandzeit [sec] | 30 |

Die Platten wurden nach dem Entformen 2 Stunden bei 160°C getempert und wiesen folgende mechanisch-technologische Daten auf:

| Daten | Beispiel 1 | Beispiel 2 |
|---|---|---|
| Spez. Gewicht [g/cm$^3$] | 1,06 | 1,10 |
| Shore D | 59 | 64 |
| Zugfestigkeit [N/mm$^2$] (nach DIN 53 504) | längs: 20,9; quer: 21,3 | längs: 21,7; quer: 22,4 |
| Bruchdehnung [%] (nach DIN 53 504) | längs: 133; quer: 140 | längs: 147, quer: 148 |
| Weiterreißwiderstand [N/mm] (nach DIN 53 515) | längs: 56; quer: 54 | längs: 67, quer: 63 |
| Sag-Test [mm] (bei 1 Stunde/160°C) | längs: 6,1; quer: 5,5 (Probendicke: 4,6 mm) | längs: 10; quer: 9,5 (Probendicke längs: 2,8 mm) (Probendicke quer : 2,9 mm) |
| Kältebiegetest (bei -30°C) | längs: ohne Bruch quer : ohne Bruch | längs: ohne Bruch quer : ohne Bruch |
| Biege-E-Modul | längs: 632; quer 695 | längs: 541; quer: 539 |

## Patentansprüche

**1.** Formkörper aus faserverstärktem Polyurethanintegralschaum, insbesondere Karosserieteile für die Automobilindustrie, dadurch gekennzeichnet, daß die Formkörper - hergestellt im RIM- bzw. RRIM-Verfahren - mit Kohlefasern (C-Fasern) verstärkt sind, wobei die Menge an C-Fasern 0,3 bis 8 Gew.-% bezogen auf das Artikelgewicht beträgt.

**2.** Formkörper nach Anspruch 1, dadurch gekennzeichnet, daß die Menge an C-Fasern 2 bis 5 Gew.-% beträgt.

**3.** Formkörper nach Anspruch 1 oder 2, dadurch gekennzeichnet, daß die durchschnittliche Faserlänge 0,3 bis 0,4 mm beträgt.

**4.** Formkörper nach einem der Ansprüche 1 bis 3, dadurch gekennzeichnet, daß die C-Fasern einen durchschnittlichen Durchmesser von 14 bis 15 μm aufweisen.

**5.** Verfahren zum Herstellen von Formkörpern nach einem der Ansprüche 1 bis 4, dadurch gekennzeichnet, daß die C-Fasern der A-Komponente (Polyol) und/oder B-Komponente (Polyisocyanat) beigemischt werden.

## Claims

**1.** Mouldings from fibre-reinforced polyurethane integral foam , in particular bodywork parts for the motorcar industry, characterized in that the mouldings - produced by the RIM or RRIM method - are reinforced with carbon fibres (C-fibres), the quantity of C-fibres amounting to from 0.3 to 8 % by wt. referred to the weight of the article.

2. Mouldings as in Claim 1, characterized in that the quantity of C-fibres amounts to from 2 to 5 % by wt.

3. Mouldings as in Claim 1 or 2, characterized in that the average length of fibre amounts to from 0.3 to 0.4 mm.

4. Mouldings as in one of the Claims 1 to 3, characterized in that the C-fibres exhibit an average diameter of from 14 to 15 $\mu$m.

5. A method of production of mouldings as in one of the Claims 1 to 4, characterized in that the C-fibres are mixed into the A-constituent (polyalcohol) and/or the B-constituent (polyisocyanate).

**Revendications**

1. Pièces moulées de mousse de polyuréthanne intégrale renforcée par des fibres, en particulier pièces de carrosserie pour l'industrie automobile, caractérisées en ce que les pièces moulées - obtenues par le procédé RIM ou par le procédé R-RIM - sont renforcées avec des fibres de carbone (fibres de C), la quantité de libres de C représentant de 0,3 à 8% en poids du poids de l'article.

2. Pièces moulées selon la revendication 1, caractérisées en ce que la quantité de libres de C se monte à 2-5% en poids.

3. Pièces moulées selon la revendication 1 ou 2, caractérisées en ce que la longueur moyenne des fibres est comprise entre 0,3 et 0,4 mm.

4. Pièces moulées selon l'une quelconque des revendications 1 à 3, caractérisées en ce que les fibres de C présentent un diamètre moyen de 14 à 15 $\mu$m.

5. Procédé de préparation de pièces moulées selon l'une quelconque des revendications 1 à 4, caractérisé en ce que les libres de C sont mélangées au composant A (polyol) et/ou au composant B (polyisocyanate).